# EUROPÄISCHE PATENTSCHRIFT

(11) **EP 3 874 225 B1**
(45) Veröffentlichungstag und Bekanntmachung des Hinweises auf die Patenterteilung: **29.11.2023**
(21) Anmeldenummer: 19795544.6
(22) Anmeldetag: 28.10.2019
(51) Int. Cl.: F42B 12/42, F42B 27/00, F41H 13/00, F42B 12/36

(54) **ELEKTRONISCHER BLENDKÖRPER**
ELECTRONIC DAZZLING DEVICE
CORPS D'ÉBLOUISSEMENT ÉLECTRONIQUE

(30) Priorität: 02.11.2018 DE 102018008663
(43) Veröffentlichungstag der Anmeldung: 08.09.2021
(73) Patentinhaber: Diehl Stiftung & Co. KG, 90478 Nürnberg (DE)
(72) Erfinder: HÖLZL, Johannes, 91054 Erlangen (DE); STARK, Robert, 91438 Bad Windsheim (DE); KLETTKE, Oliver, 90482 Nürnberg (DE); GLASMACHER, Mathias, 68799 Reilingen (DE); CABANSKI, Wolfgang, 74076 Heilbronn (DE)
(74) Vertreter: Diehl Patentabteilung
(86) Internationale Anmeldenummer: PCT/EP2019/079435
(87) Internationale Veröffentlichungsnummer: WO 2020/089183

(56) Entgegenhaltungen:
- EP-A1- 3 023 731
- WO-A1-2018/091872
- KR-A- 20170 009 584

## Beschreibung

Die vorliegende Erfindung betrifft einen elektronischen Blendkörper zum Aussenden von Lichtpulsen in Form eines kollimierten Lichtstrahls.

Zur Irritation von Personen und Sensorsystemen werden sogenannte Blendgranaten eingesetzt, die durch das Aussenden von Lichtpulsen hoher Intensität zu einer kurzzeitigen Blendung und Irritation führen sollen. Neben pyrotechnischen Blendgranaten, bei denen die Lichtpulse mittels einer Explosionsreaktion erzeugt werden, sind inzwischen auch elektronische Blendgranaten bekannt, bei denen die Lichtpulse durch elektronische Emitter erzeugt werden, die durch eine Steuereinrichtung ansteuerbare Leuchtmittel wie LEDs oder Laserdioden enthalten. Derartige elektronische Blendkörper sind zum Beispiel in EP 3 023 730 A1, EP 3 023 731 A1, KR 2017 0009584 A und DE 10 2015 015 339 A1 offenbart. EP 3 023 731 A1, auf welcher der Oberbegriff des anhängenden unabhängigen Anspruchs 1 basiert, offenbart einen elektronischen Blendkörper, bei dem jedes Leuchtmittel aus einem LED-Array besteht, der sich in einem Reflektor befindet und oberseitig über ein optisches Element (Linse, Prisma, etc.) abgeschlossen ist, sodass das emittierte Licht über den Reflektor vollständig zum optischen Element hin reflektiert wird und durch das optische Element eine Strahlaufweitung oder Strahlfokusierung erfährt.

Es ist die Aufgabe der Erfindung, einen verbesserten elektronischen Blendkörper zu schaffen, der zusätzlich zu einer großen Reichweite einen größeren Raumwinkelbereich für eine effektive Blendwirkung ermöglicht.

Diese Aufgabe wird gelöst durch einen elektronischen Blendkörper mit den Merkmalen des unabhängigen Anspruchs 1. Besonders vorteilhafte Ausgestaltungen und Weiterbildungen der Erfindung sind Gegenstand der abhängigen Ansprüche.

Der erfindungsgemäße elektronische Blendkörper weist wenigstens einen optischen Emitter zum Aussenden eines kollimierten Lichtstrahls, der ein elektronisches Leuchtmittel zum Erzeugen von Lichtpulsen und wenigstens einen Kollimator in Strahlrichtung vor dem Leuchtmittel zum Kollimieren der vom Leuchtmittel emittierten Lichtpulse aufweist, und eine Steuereinrichtung zum Ansteuern des Leuchtmittels des optischen Emitters auf. Gemäß der Erfindung ist außerdem ein Kollimator-Antrieb zum Bewegen des Kollimators vorgesehen, der von der Steuereinrichtung ansteuerbar ist, um die Strahlrichtung des kollimierten Lichtstrahls zu verändern.

Es wird vorgeschlagen, den optischen Emitter durch wenigstens einen Kollimator zum Aussenden eines kollimierten Lichtstrahls auszugestalten, um die Helligkeitsreduzierung der Lichtpulse mit größer werdendem Abstand vom Blendkörper zu verringern. Durch diese gezielte Beeinflussung der Lichtstrahlen kann die effektive Reichweite der ausgesendeten Lichtpulse vergrößert werden, in denen sie eine Beleuchtungsstärke unter einem Grenzwert für eine Augengefährdung, aber oberhalb einer Schwelle zur Blendung haben. Für diese Reichweitenvergrößerung ist kein erhöhter Energiebedarf notwendig. Außerdem wird gemäß der Erfindung vorgeschlagen, eine Strahlrichtung des kollimierten Lichtstrahls durch einen Kollimator-Antrieb zum Bewegen des Kollimators zu verändern, um die Blendwirkung zugleich in einem möglichst großen Raumwinkelbereich zu erzielen. Auf diese Weise kann trotz der kollimierten Lichtpulse eine räumlich ausgedehnte Blendwirkung erreicht werden, sodass die Effizienz des Blendkörpers insgesamt deutlich erhöht werden kann. Falls der Blendkörper mehrere optische Emitter aufweist, können mehrere Kollimator-Antriebe zum Bewegen der Kollimatoren mehrerer Emitter unabhängig voneinander und/oder Kollimator-Antriebe zum gemeinsamen Bewegen der Kollimatoren mehrerer Emitter vorgesehen sein.

Der elektronische Blendkörper weist wenigstens einen optischen Emitter, vorzugsweise mehrere optische Emitter auf. Die optischen Emitter enthalten jeweils ein elektronisches Leuchtmittel, bevorzugt LEDs oder Laserdioden bzw. LED-Arrays oder Laserarrays. Außerdem ist es vorteilhaft, wenn die Leuchtmittel LEDs oder Laserdioden in unterschiedlichen Emissionsfarben zur Bildung sogenannter RGB-Cluster enthalten.

Der Kollimator ist vorzugsweise eine Linse oder ein Prisma. Der Kollimator ist vorzugsweise aus einem Kunststoffmaterial gebildet.

Um bei dieser Ausgestaltung eine möglichst gute Kollimationswirkung zu erzielen, ist das Leuchtmittel vorzugsweise im Brennpunkt des Kollimators positioniert. Außerdem ist es bei dieser Ausgestaltung besonders vorteilhaft, wenn eine Emissionsfläche des Leuchtmittels deutlich kleiner ist als eine Öffnungsfläche des Kollimators, aber die Öffnungsfläche des Kollimators von dem vom Leuchtmittel emittierten Lichtpuls vollständig ausgeleuchtet wird.

In einer weiteren Ausgestaltung der Erfindung kann der optische Emitter zusätzlich ein elektronisches Leuchtmittel zum Erzeugen von kollimierten Lichtpulsen, wie zum Beispiel Laserquellen, und/oder wenigstens einen Reflektor in Strahlrichtung hinter und/oder neben dem Leuchtmittel zum Kollimieren der von dem Leuchtmittel emittierten Lichtpulse aufweisen.

Zum Verändern der Strahlrichtung des kollimierten Lichtstrahls sind im Rahmen der vorliegenden Erfindung zusätzlich zum Kollimator-Antrieb zum Bewegen des Kollimators optional weitere verschiedene Konstruktionen einzeln oder in Kombination denkbar.

In einer Ausführungsvariante kann zusätzlich ein Emitter-Antrieb zum Bewegen des Emitters vorgesehen sein, der von der Steuereinrichtung ansteuerbar ist, um die Strahlrichtung des kollimierten Lichtstrahls zu verändern. Falls der Blendkörper mehrere optische Emitter aufweist, können mehrere Emitter-Antriebe zum Bewegen mehrerer Emitter unabhängig voneinander und/oder Emitter-Antriebe zum gemeinsamen Bewegen mehrerer Emitter vorgesehen sein.

In einer weiteren Ausführungsvariante der Erfindung kann zusätzlich ein Blendkörper-Antrieb zum Bewegen des Blendkörpers vorgesehen sein, der von der Steuereinrichtung ansteuerbar ist, um den gesamten Blendkörper zu bewegen und damit die Strahlrichtung des kollimierten Lichtstrahls zu verändern. Alternativ oder zusätzlich kann auch eine Außenform des Blendkörpers derart ausgestaltet sein, dass sich der Blendkörper nach einem Aufschlag weiter bewegt (z.B. rollt oder springt) und so die Strahlrichtung des kollimierten Lichtstrahls verändert.

Vorzugsweise weist der Blendkörper zusätzlich zu dem wenigstens einen optischen Emitter auch wenigstens einen akustischen Emitter zum Aussenden von Schallpulsen auf. Auf diese Weise kann die Irritationswirkung des Blendkörpers weiter erhöht werden. Die akustischen Emitter enthalten vorzugsweise elektronische Schallerzeuger wie zum Beispiel Piezoschallwandler.

In einer Ausgestaltung der Erfindung kann zudem eine Kommunikationseinrichtung vorgesehen sein, die mit der Steuereinrichtung verbunden ist, sodass die Steuereinrichtung des Blendkörpers mit Steuereinrichtungen anderer optischer und/oder akustischer Irritationskörper und/oder mit einer übergeordneten Steuerung kommunizieren kann, um das Ansteuern der Emitter der verschiedenen Irritationskörper aufeinander abzustimmen. Das Ansteuern der Emitter umfasst dabei insbesondere das Einstellen von Amplitude, Phase, Frequenz und Muster der Lichtpulse bzw. Schallpulse.

In einer Ausgestaltung der Erfindung weist der Blendkörper ferner einen Abstandssensor zum Erfassen eines Abstands zwischen dem Blendkörper und einem Objekt auf, der mit der Steuereinrichtung verbunden ist. In diesem Fall ist die Steuereinrichtung vorzugsweise ausgestaltet, um den optischen Emitter in Abhängigkeit von dem erfassten Abstand zu einem Objekt anzusteuern. Anhand der erfassten Abstandsdaten können zum Beispiel Parameter der Pulse wie insbesondere deren Amplituden und Frequenzen optimal eingestellt werden.

In einer Ausgestaltung der Erfindung weist der Blendkörper ferner einen integrierten Energiespeicher auf. Vorzugsweise ist der Energiespeicher ein wiederaufladbarer Energiespeicher. Das Aufladen des Energiespeichers kann berührungslos (z.B. induktiv) oder über einen Anschlussstecker erfolgen.

In einer Ausgestaltung der Erfindung weist der Blendkörper ferner eine Selbstzerstörungseinrichtung zur Selbstzerstörung des Blendkörpers, insbesondere dessen Steuereinrichtung auf. Durch eine Selbstzerstörung, die vorzugsweise per Fernsteuerung ausgelöst wird, kann verhindert werden, dass der Blendkörper von Dritten in Besitz genommen und gegen einen selbst verwendet wird.

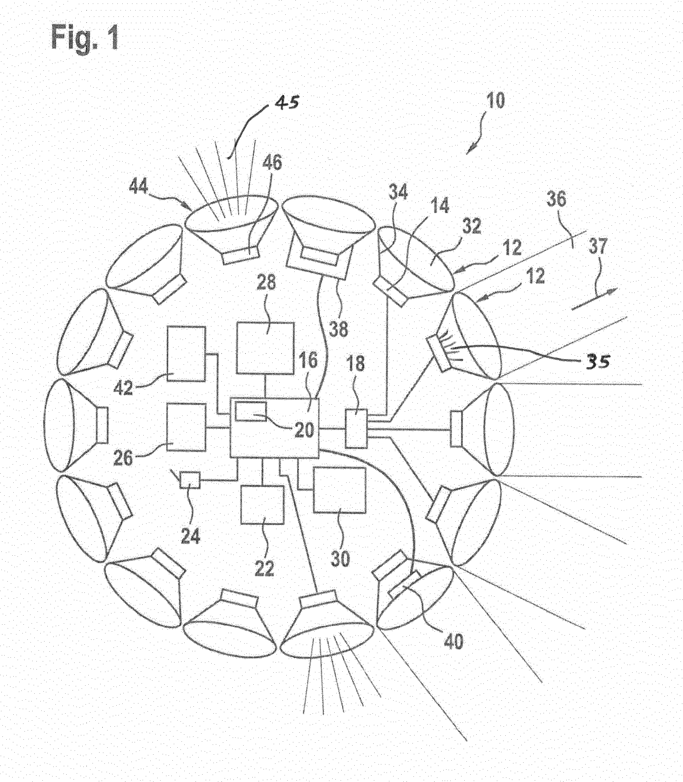

Obige sowie weitere Merkmale und Vorteile der Erfindung werden aus der nachfolgenden Beschreibung bevorzugter, nicht-einschränkender Ausführungsbeispiele anhand der beiliegenden Zeichnung besser verständlich. Darin zeigt die einzige Fig. 1 größtenteils schematisch eine Prinzipdarstellung eines elektronischen Blendkörpers gemäß einem Ausführungsbeispiel der vorliegenden Erfindung.

Fig. 1 zeigt den Grundaufbau eines Ausführungsbeispiels eines elektronischen Blendkörpers der Erfindung.

Der Blendkörper 10 von Fig. 1 hat ein im Wesentlichen zylindrisches oder kugelförmiges Gehäuse, an dessen Mantelfläche eine Anzahl optischer Emitter 12 angeordnet ist. Die optischen Emitter 12 enthalten jeweils ein elektronisches Leuchtmittel 14 zum Erzeugen von Lichtpulsen 35 wie zum Beispiel LEDs, LED-Arrays, Laserdioden oder Laserarrays. Diese elektronischen Leuchtmittel 14 werden von einer Steuereinrichtung 16 über einen zwischengeschalteten Treiber 18 angesteuert, um insbesondere die Amplituden, Frequenzen, Phasen und Signalmuster der ausgesendeten Lichtpulse einzustellen. In Fig. 1 ist der besseren Übersichtlichkeit wegen nur ein Teil der leitungsgebundenen oder drahtlosen Verbindungen zwischen der Steuereinrichtung 16 und den Leuchtmitteln 14 der Emitter 12 eingezeichnet.

Zur Verbesserung der Irritationswirkung ist der Blendkörper 10 bevorzugt auch mit wenigstens einem akustischen Emitter 44 ausgestattet. Die akustischen Emitter 44 enthalten jeweils einen elektronischen Schallerzeuger 46 zum Erzeugen von Schallpulsen 45 wie zum Beispiel einen Piezoschallwandler. Diese elektronischen Schallerzeuger 46 werden ebenfalls von der Steuereinrichtung 16 angesteuert.

Die Steuereinrichtung 16 enthält vorzugsweise einen Timer 20. Die Steuereinrichtung 16 ist zudem mit einem Aktivierungsschalter 24 und/oder einem Entsicherungsmechanismus verbunden, der zum Beispiel vor einem Abwurf des Blendkörpers 10 betätigt werden kann. Ferner enthält der Blendkörper 10 vorzugsweise einen (z.B. elektromagnetischen oder akustischen oder optischen) Abstandssensor 26 zum Erfassen eines Abstandes zwischen dem Blendkörper 10 und einem Objekt. Ferner kann der Blendkörper 10 auch einen Positionssensor zum Erfassen seiner Position (z.B. mittels GPS- oder GNSS-System) und / oder einen Beschleunigungssensor zum Erfassen seines Wurfes oder seines Aufschlages enthalten. Im Ausführungsbeispiel von Fig. 1 enthält der Blendkörper 10 optional zudem eine Kommunikationseinrichtung 28. Der Abstandssensor 26 und die Kommunikationseinrichtung 28 sind ebenfalls mit der Steuereinrichtung 16 verbunden.

Der Aktivierungsschalter 24, der Entsicherungsmechanismus, die genannten Sensoren 26 und die Kommunikationseinrichtung 28 dienen als Aktivierungsmechanismus zum Aktivieren der Steuereinrichtung 18, damit diese direkt bei der Aktivierung oder - mit Hilfe des Timers 24 - eine vorbestimmte Zeit nach der Aktivierung die Leuchtmittel 14 der optischen Emitter 12 und, falls vorhanden, die Schallerzeuger 46 der akustischen Emitter 44 zum Aussenden der Lichtpulse 35 bzw. Schallpulse 45 ansteuert. So können die Lichtpulse 35 bzw. Schallpulse 45 zum Beispiel eine vorbestimmte Zeitdauer nach einer Betätigung des Aktivierungsschalters 22 oder des Entsicherungsmechanismus, beim Unterschreiten eines vorbestimmten Grenzwerts durch den vom Abstandssensor 26 erfassten Objektabstand, beim Erreichen einer vorbestimmten Position des Blendkörpers 10, eine vorbestimmte Zeitdauer nach einem Abwurf oder einem Aufschlag des Blendkörpers 10, etc. ausgesendet werden.

Der mit dem Abstandssensor 26 erfasste Objektabstand kann von der Steuereinrichtung 16 zudem verwendet werden, die von den Emittern 12, 44 ausgesendeten Pulse an den Objektabstand anzupassen. Beispielsweise kann die Helligkeit von Lichtpulsen an den Objektabstand angepasst werden.

Die Kommunikationseinrichtung 28 kann zum Empfangen eines Aktivierungssignals von einer Fernsteuerung verwendet werden. Außerdem kann die Kommunikationseinrichtung 28 zur Kommunikation der Steuereinrichtung 16 mit Steuereinrichtungen anderer Blendkörper oder einer übergeordneten Steuerung dienen. Auf diese Weise können die Pulse der Emitter 12, 44 von verschiedenen Blendkörpern 10 aufeinander abgestimmt werden. Beispielsweise können die Lichtpulse oder Schallpulse synchron oder in einem wohldefinierten Muster ausgesendet werden.

Der Blendkörper 10 ist bevorzugt auch mit einem Energiespeicher 22, vorzugsweise einem wiederaufladbaren Energiespeicher, zur Energieversorgung der elektronischen Komponenten des Blendkörpers 10 ausgestattet.

Außerdem ist der Blendkörper 10 optional auch mit einer Selbstzerstörungseinrichtung 30 versehen. Sollte ein Blendkörper 10 in die Hände von Dritten gelangen und die Gefahr bestehen, dass diese den Blendkörper 10 gegen einen selbst verwenden, so kann die Selbstzerstörungseinrichtung 30 per Fernsteuerung über die Kommunikationseinrichtung 28 aktiviert werden, um den Blendkörper 10, insbesondere dessen Steuereinrichtung 16 zu zerstören.

Wie in Fig. 1 veranschaulicht, sind die optischen Emitter 12 des Blendkörpers 10 so ausgestaltet, dass sie kollimierte Lichtstrahlen 36 in zueinander verschiedenen Strahlrichtungen 37 aussenden. Das Aussenden heller Lichtstrahlen soll zur Irritation oder vorübergehenden Blendungen von Personen oder Sensorsystemen im Umfeld des Blendkörpers 10 dienen. Durch die kollimierte Lichtabstrahlung kann eine in einem bestimmten Intervall liegende Beleuchtungsstärke, die beispielsweise unter dem Grenzwert für eine Augengefährdung (d.h. dauerhafte Schädigung des Auges), aber über der Schwelle für eine ausreichende Blendung liegt, über eine möglichst große Reichweite hinweg erzielt werden.

Durch die kollimierte Abstrahlung der Lichtpulse 35 kann die Reichweite, in der die gewünschte Irritationswirkung erzielt werden kann, zum einen vergrößert und zum anderen gezielt angepasst werden. Dies erfolgt durch eine gezielte Einstellung der emittierenden Fläche des Emitters 12, d.h. der Querschnittsfläche des kollimierten Lichtstrahls 36, und des Divergenzwinkels des kollimierten Lichtstrahls 36. Im Ergebnis kann so die Helligkeitsabnahme der Lichtpulse 35 mit größer werdendem Abstand vom Blendkörper 10 im Vergleich zu Blendkörpern mit isotrop oder diffus abstrahlenden Emittern verringert werden. Und dieses Ergebnis kann ohne Steigerung des Energieverbrauchs erzielt werden.

Das Aussenden der kollimierten Lichtstrahlen 36 kann beispielsweise durch eine oder mehrere der nachfolgend erläuterten Maßnahmen erreicht werden.

Gemäß der Erfindung sind in Abstrahlrichtung 37 vor die Leuchtmittel 14 Kollimatoren 32 gesetzt, mit denen die von den Leuchtmitteln 14 emittierten Lichtpulse 35 kollimiert werden können. Als Kollimatoren 32 können beispielsweise Linsen oder Prismen eingesetzt werden, beispielsweise aus einem Kunststoffmaterial. Im Ausführungsbeispiel von Fig. 1 weist jeder optische Emitter 12 einen Kollimator 32 auf und bildet mit diesem eine Einheit. Alternativ können die Kollimatoren 32 für mehrere Emitter 12 nebeneinander auf / in einem gemeinsamen Element angebracht sein, beispielsweise durch Pressen in eine gemeinsame Kunststoffplatte.

Der Abstand zwischen dem Kollimator 32 und dem Leuchtmittel 14 ist vorzugsweise so gewählt, dass das Leuchtmittel 14 möglichst genau im Brennpunkt des Kollimators 32 liegt. Durch die Variation dieses Abstandes zwischen Kollimator 32 und Leuchtmittel 14 lässt sich der Divergenzwinkel des Lichtstrahls auf der dem Leuchtmittel 14 abgewandten Seite des Kollimators 32 einstellen. Außerdem ist die Emissionsfläche des Leuchtmittels 14 vorteilhafterweise kleiner als die Öffnungsfläche des Kollimators 32. Um eine möglichst gute Kollimation des Lichtstrahls zu erreichen, ist es besonders günstig, wenn die Emissionsfläche des Leuchtmittels 14 deutlich kleiner als die Öffnungsfläche des Kollimators 32 ist und die Abstrahlcharakteristik des Leuchtmittels 14 derart gestaltet ist, dass die gesamte Öffnungsfläche des Kollimators 32 ausgeleuchtet wird.

Optional können die optischen Emitter 12 außerdem elektronische Leuchtmittel 14 verwenden, die selbst eine gerichtete Abstrahlcharakteristik aufweisen. Dies ist beispielsweise bei Laserquellen wie Laserdioden der Fall.

Optional kann zusätzlich wenigstens ein Reflektor 34 hinter und/oder um das Leuchtmittel 14 herum vorgesehen sein. Der Reflektor 34 kann zum Beispiel durch eine reflektierend ausgebildete Wandung des optischen Emitters 12 bereitgestellt werden.

Da durch einen kollimierten Lichtstrahl 36 im Vergleich zu einem nicht kollimierten, isotropen Lichtstrahl ein kleinerer Raumwinkelbereich abgedeckt wird, ist bei dem Blendkörper 10 der Erfindung außerdem vorgesehen, dass die Strahlrichtung 37 des kollimierten Lichtstrahls 36 verändert werden kann. Auf diese Weise kann innerhalb eines Zeitraums eine Blendwirkung in einem größeren Raumwinkelbereich erzielt und so die Effektivität des Blendkörpers 10 gesteigert werden. Die Richtungsänderung des kollimierten Lichtstrahls 36 kann je nach Ausführungsform stetig oder schrittweise erfolgen.

Das Verändern der Strahlrichtung 36 des kollimierten Lichtstrahls 36 kann beispielsweise durch eine oder mehrere der nachfolgend erläuterten Maßnahmen erreicht werden.

Gemäß der Erfindung sind die optischen Emitter 12 mit Kollimator-Antrieben 40 zum Bewegen des jeweiligen Kollimators 32 oder mit einem gemeinsamen Kollimator-Antrieb für mehrere Kollimatoren 32 versehen, die von der Steuereinrichtung 16 ansteuerbar sind. Durch eine Bewegung des Kollimators 32 werden die Kollimationswirkung und damit automatisch auch die Strahlrichtung 37 des kollimierten Lichtstrahls 36 verändert.

Optional können zusätzlich die optischen Emitter 12 mit Emitter-Antrieben 38 zum Bewegen des jeweiligen Emitters 12 oder mit einem gemeinsamen Emitter-Antrieb versehen sein, die von der Steuereinrichtung 16 ansteuerbar sind. Durch eine Bewegung des gesamten Emitters 12 wird automatisch auch die Strahlrichtung 37 des von ihm ausgesendeten, kollimierten Lichtstrahls 36 verändert.

Optional kann zusätzlich der Blendkörper 10 mit einem Blendkörper-Antrieb 42 zum Bewegen des gesamten Blendkörpers 10 ausgestattet sein, der von der Steuereinrichtung 16 ansteuerbar ist. Beispielsweise kann im Innern des Blendkörpers 10 ein Exzenter angeordnet sein, der mit einem Antrieb versehen ist. Durch eine Bewegung des gesamten Blendkörpers 10 werden automatisch die Strahlrichtungen 37 der kollimierten Lichtstrahlen 36 aller optischen Emitter 12 verändert.

Optional kann außerdem eine Außenform des Blendkörpers 10 derart ausgestaltet sein, dass sich der Blendkörper 10 nach einem Aufschlag weiter bewegt, d.h. nach seinem ersten Aufschlag zum Beispiel weiter rollt oder springt. Durch die Bewegung des gesamten Blendkörpers 10 werden automatisch die Strahlrichtungen 37 der kollimierten Lichtstrahlen 36 aller optischen Emitter 12 verändert.

Die verschiedenen genannten Antriebe 38, 40, 42 können in diesem Zusammenhang in Abhängigkeit von verschiedenen Parametern wie beispielsweise dem durch den kollimierten Lichtstrahl 36 ausgeleuchteten Raumwinkel, die Bestrahlungsstärke des optischen Emitters 12, die typische Relaxationszeit der Photorezeptoren des menschlichen Auges und dergleichen geregelt werden.

### BEZUGSZIFFERNLISTE

- 10: elektronischer Blendkörper
- 12: optischer Emitter
- 14: Leuchtmittel
- 16: Steuereinrichtung
- 18: Treiber
- 20: Timer
- 22: Energiespeicher
- 24: Aktivierungsschalter
- 26: Abstandssensor
- 28: Kommunikationseinrichtung
- 30: Selbstzerstörungseinrichtung
- 32: Kollimator, insbes. Linse oder Prisma
- 34: Reflektor
- 35: von Leuchtmittel generierte Lichtpulse
- 36: kollimierter Lichtstrahl
- 37: Strahlrichtung
- 38: Emitter-Antrieb
- 40: Kollimator-Antrieb
- 42: Blendkörper-Antrieb
- 44: akustischer Emitter
- 45: Schallpulse
- 46: Schallerzeuger

## Patentansprüche

1. Elektronischer Blendkörper (10), aufweisend:
wenigstens einen optischen Emitter (12) zum Aussenden eines kollimierten Lichtstrahls (36), der ein elektronisches Leuchtmittel (14) zum Erzeugen von Lichtpulsen (35) und wenigstens einen Kollimator (32) in Strahlrichtung (37) vor dem Leuchtmittel (14) zum Kollimieren der vom Leuchtmittel (14) emittierten Lichtpulse (35) aufweist; und
eine Steuereinrichtung (16) zum Ansteuern des Leuchtmittels (14) des optischen Emitters (12),
**dadurch gekennzeichnet, dass**
ein Kollimator-Antrieb (40) zum Bewegen des Kollimators (32) vorgesehen ist, der von der Steuereinrichtung (16) ansteuerbar ist, um die Strahlrichtung (37) des kollimierten Lichtstrahls (36) zu verändern.

2. Blendkörper (10) nach Anspruch 1, bei welchem das Leuchtmittel (14) im Brennpunkt des Kollimators (32) positioniert ist.

3. Blendkörper (10) nach Anspruch 1 oder 2, bei welchem eine Emissionsfläche des Leuchtmittels (14) kleiner ist als eine Öffnungsfläche des Kollimators (32) und die Öffnungsfläche des Kollimators (32) von den vom Leuchtmittel (14) emittierten Lichtpulsen (35) vollständig ausgeleuchtet wird.

4. Blendkörper (10) nach einem der vorhergehenden Ansprüche, bei welchem der optische Emitter (12) ein elektronisches Leuchtmittel (14) zum Erzeugen von kollimierten Lichtpulsen (35) und/oder wenigstens einen Reflektor (34) in Strahlrichtung (37) hinter und/oder neben dem Leuchtmittel (14) zum Kollimieren der von dem Leuchtmittel (14) emittierten Lichtpulsen (35) aufweist.

5. Blendkörper (10) nach einem der vorhergehenden Ansprüche, bei welchem ferner ein Emitter-Antrieb (38) zum Bewegen des Emitters (12) vorgesehen ist, der von der Steuereinrichtung (16) ansteuerbar ist, um die Strahlrichtung (37) des kollimierten Lichtstrahls (36) zu verändern.

6. Blendkörper (10) nach einem der vorhergehenden Ansprüche, bei welchem ferner ein Blendkörper-Antrieb (42) zum Bewegen des Blendkörpers (10) vorgesehen ist, der von der Steuereinrichtung (16) ansteuerbar ist, um den gesamten Blendkörper zu bewegen und damit die Strahlrichtung (37) des kollimierten Lichtstrahls (36) zu verändern.

7. Blendkörper (10) nach einem der vorhergehenden Ansprüche, welcher ferner wenigstens einen akustischen Emitter (44) zum Aussenden von Schallpulsen (45) aufweist.

8. Blendkörper (10) nach einem der vorhergehenden Ansprüche, bei welchem ferner eine Kommunikationseinrichtung (28) vorgesehen ist, die mit der Steuereinrichtung (16) verbunden ist, sodass die Steuereinrichtung (16) des Blendkörpers (10) mit Steuereinrichtungen anderer optischer und/oder akustischer Irritationskörper und/oder mit einer übergeordneten Steuerung kommunizieren kann, um das Ansteuern der Emitter der verschiedenen Irritationskörper aufeinander abzustimmen.

9. Blendkörper (10) nach einem der vorhergehenden Ansprüche, welcher ferner einen Abstandssensor (26) zum Erfassen eines Abstands zwischen dem Blendkörper (10) und einem Objekt aufweist, der mit der Steuereinrichtung verbunden ist.

10. Blendkörper (10) nach einem der vorhergehenden Ansprüche, welcher ferner einen integrierten Energiespeicher (22) aufweist.

## Claims

1. Electronic dazzling element (10), having:
at least one optical emitter (12) serving to emit a collimated light beam (36) and having an electronic light-emitting means (14) for generating light pulses (35) and, in the beam direction (37) upstream of the light-emitting means (14), at least one collimator (32) for collimating the light pulses (35) emitted by the light-emitting means (14); and a control device (16) for controlling the light-emitting means (14) of the optical emitter (12),
**characterized in that**
a collimator drive (40), which is controllable by the control device (16) for the purpose of changing the beam direction (37) of the collimated light beam (36), is provided for moving the collimator (32).

2. Dazzling element (10) according to Claim 1, wherein the light-emitting means (14) is positioned at the focal point of the collimator (32).

3. Dazzling element (10) according to Claim 1 or 2, wherein
an emission surface of the light-emitting means (14) is smaller than an opening surface of the collimator (32) and the opening surface of the collimator (32) is fully illuminated by the light pulses (35) emitted by the light-emitting means (14).

4. Dazzling element (10) according to any of the preceding claims, wherein
the optical emitter (12) has an electronic light-emitting means (14) for generating collimated light pulses (35) and/or at least one reflector (34) in the beam direction (37) downstream of and/or next to the light-emitting means (14) for collimating the light pulses (35) emitted by the light-emitting means (14).

5. Dazzling element (10) according to any of the preceding claims, wherein
an emitter drive (38), which is controllable by the control device (16) for the purpose of changing the beam direction (37) of the collimated light beam (36), is furthermore provided for moving the emitter (12) .

6. Dazzling element (10) according to any of the preceding claims, wherein
a dazzling element drive (42), which is controllable by the control device (16) for the purpose of moving the entire dazzling element and hence changing the beam direction (37) of the collimated light beam (36), is furthermore provided for moving the dazzling element (10).

7. Dazzling element (10) according to any of the preceding claims,
furthermore having at least one acoustic emitter (44) for emitting sound pulses (45).

8. Dazzling element (10) according to any of the preceding claims, wherein
a communications device (28) is furthermore provided, the latter being connected to the control device (16) to the effect that the control device (16) of the dazzling element (10) can communicate with control devices of other optical and/or acoustic disorientation elements and/or with a higher-level controller in order to coordinate the controlling of the emitters of the various disorientation elements with respect to one another.

9. Dazzling element (10) according to any of the preceding claims,
furthermore having a distance sensor (26) for detecting a distance between the dazzling element (10) and an object, which distance sensor is connected to the control device.

10. Dazzling element (10) according to any of the preceding claims,
furthermore having an integrated energy store (22).

## Revendications

1. Corps d'éblouissement électronique (10), présentant :
au moins un émetteur optique (12) pour émettre un faisceau lumineux collimaté (36), qui présente un moyen d'éclairage électronique (14) pour générer des impulsions lumineuses (35) et au moins un collimateur (32) dans la direction de faisceau (37) devant le moyen d'éclairage (14) pour collimater les impulsions lumineuses (35) émises par le moyen d'éclairage (14) ; et
un dispositif de commande (16) pour piloter le moyen d'éclairage (14) de l'émetteur optique (12),
**caractérisé en ce qu'**un dispositif d'entraînement de collimateur (40) pour déplacer le collimateur (32) est prévu qui peut être piloté par le dispositif de commande (16) pour modifier la direction de faisceau (37) du faisceau lumineux collimaté (36).

2. Corps d'éblouissement (10) selon la revendication 1, dans lequel le moyen d'éclairage (14) est positionné au foyer du collimateur (32).

3. Corps d'éblouissement (10) selon la revendication 1 ou 2, dans lequel une surface d'émission du moyen d'éclairage (14) est inférieure à une surface d'ouverture du collimateur (32), et la surface d'ouverture du collimateur (32) est entièrement éclairée par les impulsions lumineuses (35) émises par le moyen d'éclairage (14).

4. Corps d'éblouissement (10) selon l'une quelconque des revendications précédentes, dans lequel l'émetteur optique (12) présente un moyen d'éclairage électronique (14) pour générer des impulsions lumineuses collimatées (35) et/ou au moins un réflecteur (34) dans la direction de faisceau (37) derrière et/ou à côté du moyen d'éclairage (14) pour collimater les impulsions lumineuses (35) émises par le moyen d'éclairage (14).

5. Corps d'éblouissement (10) selon l'une quelconque des revendications précédentes, dans lequel en outre un dispositif d'entraînement d'émetteur (38) pour déplacer l'émetteur (12) est prévu qui peut être piloté par le dispositif de commande (16) pour modifier la direction de faisceau (37) du faisceau lumineux (36) collimaté.

6. Corps d'éblouissement (10) selon l'une quelconque des revendications précédentes, dans lequel en outre un dispositif d'entraînement de corps d'éblouissement (42) pour déplacer le corps d'éblouissement (10) est prévu qui peut être piloté par le dispositif de commande (16) pour déplacer le corps d'éblouissement tout entier et donc pour modifier la direction de faisceau (37) du faisceau lumineux collimaté (36).

7. Corps d'éblouissement (10) selon l'une quelconque des revendications précédentes, présentant en outre au moins un émetteur acoustique (44) pour émettre des impulsions acoustiques (45).

8. Corps d'éblouissement (10) selon l'une quelconque des revendications précédentes, dans lequel en outre un dispositif de communication (28) est prévu qui est relié au dispositif de commande (16) de sorte que le dispositif de commande (16) du corps d'éblouissement (10) peut communiquer avec des dispositifs de commande d'autres corps d'irritation optiques et/ou acoustiques et/ou avec une commande supérieure afin de mettre au point le pilotage des émetteurs des différents corps d'irritation.

9. Corps d'éblouissement (10) selon l'une quelconque des revendications précédentes, présentant en outre un capteur de distance (26) pour détecter une distance entre le corps d'éblouissement (10) et un objet et qui est relié au dispositif de commande.

10. Corps d'éblouissement (10) selon l'une quelconque des revendications précédentes, présentant en outre un accumulateur d'énergie intégré (22).
